# EUROPEAN PATENT SPECIFICATION

(11) **EP 4 604 497 B1**
(45) Date of publication and mention of the grant of the patent: **29.04.2026**
(21) Application number: 24188288.5
(22) Date of filing: 12.07.2024
(51) Int. Cl.: H04L 67/125, H04L 12/28, H04L 67/565

(54) **NETWORK MANAGEMENT DEVICE AND METHOD**
NETZWERKVERWALTUNGSVORRICHTUNG UND -VERFAHREN
DISPOSITIF ET PROCÉDÉ DE GESTION DE RÉSEAU

(30) Priority: 16.02.2024 KR 20240022775
(43) Date of publication of application: 20.08.2025
(73) Proprietor: Hanwha Vision Co., Ltd., Seongnam-si, Gyeonggi-do 13488 (KR)
(72) Inventor: Lee, Jong Ho, Seongnam-si (KR)
(74) Representative: Glawe, Delfs, Moll

(56) References cited:
- EP-A1- 3 355 521
- US-A1- 2008 233 983

## Description

### BACKGROUND

### 1. Technical Field

The present disclosure relates to a network management device and method, and more particularly, to a network management device and method for relaying control commands between a service-providing device and a user terminal in a network.

### 2. Description of the Related Art

Users may receive services from service-providing devices in a network. For example, the service-providing device may be a camera. The video captured by the camera is transmitted to a user terminal via the network, and the user may check the scene via the video output of the user terminal.

A plurality of service-providing devices may exist in the network. At least some of the plurality of service-providing devices may provide different functions. For example, service-providing devices manufactured by different manufacturers may be included in the network, or service-providing devices that provide different functions by the same manufacturer may be included in the network.

Since different service-providing devices operate with different commands, it may not be easy to integrate and manage different service-providing devices.

Document EP 3 355 521 A1 describes a smart home service which is capable of providing an environment in which calling a control command for a device is available via a user terminal protocol to control between the device and a user terminal based on different type of protocol.

Document US 2008/0233983 A1 relates to controlling a home network device according to a received text message by converting the control signal of the text message to a converted control signal using a protocol compatible with the home network device to be controlled and transmitting the converted control signal to the home network device.

Therefore, there is a need for a technology that enables the integrated management of different service-providing devices.

### SUMMARY

Embodiments of the present disclosure provide a network management device according to claim 1 and a network management method according to claim 9.
Further embodiments are set out in the dependent claims.

Aspects of the present disclosure are not limited to the above-mentioned aspects. That is, other aspects that are not mentioned may be obviously understood by those skilled in the art from the following specification.

According to an aspect of the present disclosure, a network management device is provided, comprising: a first communication unit configured to receive a control command requested to be transmitted to a destination device among a plurality of service-providing devices in a network; a command management unit configured to determine whether the received control command is a common command which is not recognized by the destination device or a dedicated command which is recognized by the destination device, and convert the control command into a dedicated command if the control command is a common command; and a second communication unit configured to transmit the received control command or the converted control command to the destination device.

The common command may comprise a control command for the same function that is provided by at least some of the plurality of service-providing devices, and the dedicated command may comprise a control command that is not comprised by the common command among received control commands.

If the control command is the dedicated command for the destination device, the second communication unit may be configured to transmit the control command to the destination device.

If cache information is available for the control command, the command management unit may be configured to transmit the cache information to a user terminal that transmitted the control command.

The network management device may further comprise a relay unit configured to relay communication between a user terminal that transmitted the control command and the destination device.

The relay unit may be configured to relay the communication between the user terminal and the destination device by verifying whether the user terminal is authenticated.

If there is a plurality of destination devices, the command management unit may be configured to convert the control command into a dedicated command for each of the plurality of destination devices.

If there is a plurality of dedicated commands corresponding to the common command, the command management unit may be configured to convert the control command into the plurality of dedicated commands.

The common command and the dedicated command may comprise commands added or updated via a cloud service.

The control command may comprise identification information of the destination device.

According to another aspect of the present disclosure, a network management method is provided, comprising the steps: receiving a control command that is requested to be transmitted to a destination device among a plurality of service-providing devices in a network; determining whether the received control command is a common command which is not recognized by the destination device or a dedicated command which is recognized by the destination device; converting the received control command into a dedicated command if the control command is a common command; and transmitting the received control command or the converted control command to the destination device.

The common command may comprise a control command for the same function that is provided by at least some of the plurality of service-providing devices, and the dedicated command may comprise a control command that is not comprised by the common command among received control commands.

The network management method may further comprise transmitting the control command to the destination device if the control command is the dedicated command for the destination device.

The network management method may further comprise transmitting cache information to a user terminal that transmitted the control command if the cache information is available for the control command .

The network management method may further comprise relaying communication between a user terminal that transmitted the control command and the destination device.

The relaying of the communication between the user terminal and the destination device may comprise relaying the communication between the user terminal and the destination device by verifying whether the user terminal is authenticated.

The network management method may further comprise converting the control command into a dedicated command for each of a plurality of destination devices when there is a plurality of destination devices.

The converting of the control command into a plurality of dedicated commands may comprise converting the control command into the plurality of dedicated commands if there is a plurality of dedicated commands corresponding to the common command.

The common command and the dedicated command may comprise commands added or updated via a cloud service.

The control command may comprise identification information of the destination device.

The details of other embodiments are included in the detailed description and drawings.

According to the network management device and method according to the present disclosure as described above, since the control command transmitted from a user terminal is converted into the dedicated command, i.e., a control command compatible with the service-providing device, integrated control of different service-providing devices is possible.

### BRIEF DESCRIPTION OF THE DRAWINGS

The above and other aspects and features of the present disclosure will become more apparent by describing in detail exemplary embodiments thereof with reference to the attached drawings, in which:
FIG. 1 is a diagram illustrating a network management system;
FIG. 2 is a diagram illustrating a user terminal;
FIG. 3 is a diagram for describing functions of a network management device;
FIG. 4 is a block diagram of the network management device according to an exemplary embodiment of the present disclosure;
FIG. 5 is a diagram for describing an operation of a command management unit when a common command is received;
FIG. 6 is a diagram for describing an operation of the command management unit when a dedicated command is received;
FIG. 7 is a diagram for describing an operation of the command management unit if cache information is available;
FIG. 8 is a diagram illustrating a common command table;
FIG. 9 is a diagram illustrating a dedicated command table; and
FIG. 10 is a diagram for describing an operation of a relay unit.

### DETAILED DESCRIPTION OF THE EMBODIMENTS

Hereinafter, exemplary embodiments of the present disclosure will be described in detail with reference to the accompanying drawings. Advantages and features of the present disclosure, and a method for achieving the advantages and features will become apparent with reference to the exemplary embodiments described below in detail in conjunction with the accompanying drawings. However, the present disclosure is not limited to the exemplary embodiments disclosed below but may be implemented in a variety of different forms. These exemplary embodiments will be provided only in order to make the present disclosure complete and allow those skilled in the art to completely recognize the scope of the present disclosure, and the present disclosure is only defined by the appended claims. The same reference numbers indicate the same components throughout the specification.

Unless defined otherwise, all terms (including technical and scientific terms) used in the present specification have the same meaning as meanings commonly understood by those skilled in the art to which the present disclosure pertains. In addition, terms defined in generally used dictionaries are not ideally or excessively interpreted unless specifically defined clearly.

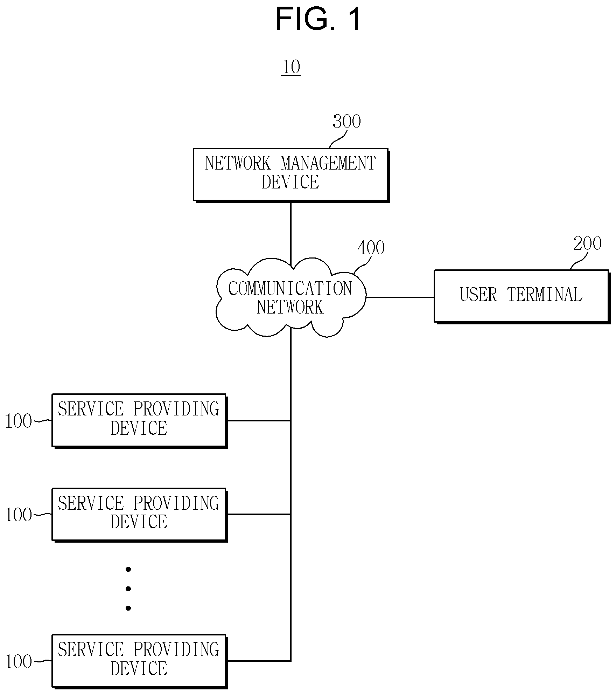

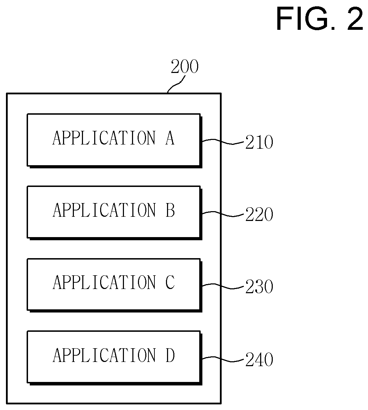

FIG. 1 is a diagram illustrating a network management system, and FIG. 2 is a diagram illustrating a user terminal.

Referring to FIG. 1, a network management system 10 comprises a service-providing device 100, a user terminal 200, a network management device 300, and a communication network 400.

The service-providing device 100 may provide a function in form of a network service. In the present disclosure, the network service refers to a service that may be provided via a network. The network service may comprise a video provision service. The service-providing device 100 may comprise at least one of a camera, a network video recorder (NVR), a digital video recorder (DVR), and a management server. The service-providing device 100 may provide video generated by capturing or may provide stored video. The management server may transmit the captured or stored video according to an external request. For example, the service-providing device 100 may be a video-providing system built in an on-premise manner. A plurality of service-providing devices 100 operated by the same entity or different entities may provide individual video-providing services. The video provided by the service-providing device 100 may be a moving image or still image.

The user terminal 200 may receive the network service provided by the service-providing device 100. For example, the user terminal 200 may receive the video from the service-providing device 100.

The network management system 10 may comprise a plurality of service-providing devices 100. The user terminal 200 may receive a network service from a service-providing device 100 selected from among the plurality of service-providing devices 100.

The network management device 300 may be configured to relay communication between the service-providing device 100 and the user terminal 200. Specifically, the network management device 300 may be configured to relay an exchange of control commands between the service-providing device 100 and the user terminal 200.

The user terminal 200 may transmit a control command to receive a network service. The network management device 300 may be configured to receive the control command from the user terminal 200, identify the service-providing device 100 corresponding to the control command, and transmit a service-providing command to the corresponding service-providing device 100. The service-providing command is generated with reference to the control command and may represent a dedicated command to be described later. The service-providing device 100 may provide a network service corresponding to the service-providing command. For example, the service-providing device 100 may transmit the video to the user terminal 200.

The communication network 400 may be configured to provide a communication path between the service-providing device 100, the user terminal 200, and the network management device 300. For example, the user terminal 200 may transmit the control command to the network management device 300 via the communication network 400, and the network management device 300 may transmit the service-providing command to the service-providing device 100 via the communication network 400. In addition, the service-providing device 100 may provide a network service to the user terminal 200 via the communication network 400.

FIG. 1 illustrates one communication network 400, but the communication network 400 may comprise a plurality of partial communication networks (not illustrated) that connect the service-providing device 100, the user terminal 200, and the network management device 300 to each other.

As described above, the network management system 10 may comprise a plurality of service-providing devices 100. At least some of the plurality of service-providing devices 100 may be configured to provide different functions. For example, the network management system 10 may comprise a plurality of service-providing devices 100 manufactured by different manufacturers, or may comprise a plurality of service-providing devices 100 that provide different functions by the same manufacturer. Different service-providing devices 100 may operate with individually set commands.

Referring to FIG. 2, the user terminal 200 may comprise a plurality of applications 210, 220, 230, and 240.

The plurality of applications 210 to 240 may be provided to control the functions of the plurality of service-providing devices 100. For example, the application A 210 may be provided to control a function of a service-providing device A, and the application B 220 may be provided to control a function of a service-providing device B

Meanwhile, a lot of time and cost may be consumed in producing and maintaining the plurality of applications 210 to 240. The network management device 300 according to an exemplary embodiment of the present disclosure may be configured to integrate and manage at least some of the plurality of service-providing devices 100. That is, if a preset common command is received from the user terminal 200, the network management device 300 may be configured to transmit a dedicated command corresponding to the common command to the service-providing device 100.

In the present disclosure, the common command may comprise a control command for the same function that may be performed by at least some of the plurality of service-providing devices 100. Among the functions provided by at least some of the service-providing devices 100 comprised by the network management system 10, there may be the same functions regardless of whether the manufacturer or product is the same. For example, at least some of the service-providing devices 100 may be switched to an active state to start the function or switched to an inactive state to stop the function.

The common command may comprise a request for a response regarding whether the service-providing device 100 is active. At least some of the applications 210 to 240 comprised by the user terminal 200 may transmit the common command to request a response regarding whether the corresponding service-providing device 100 is active. For example, the application A 210 may transmit a common command that comprises a request for a response regarding whether the service-providing device A is active together with identification information of the service-providing device A. In this case, the network management device 300 may be configured to transmit a dedicated command for requesting a response regarding whether the service-providing device A is active to the service-providing device A and transmit the response to the user terminal 200.

The common command may comprise a user registration command for using the service-providing device 100 or a user deregistration command for deactivating the use of the service-providing device 100.

The common command may comprise a license attachment command or a license separation command for use of the service-providing device 100. The type or scope of the service provided by the service-providing device 100 may be determined on the basis of the license.

The common commands may comprise a basic information request command for the service-providing device 100. Basic information of the service-providing device 100 may comprise a firmware version of equipment comprised by the service-providing device 100, a name of the equipment, and identification information of the equipment. In addition, the common command may comprise a command requesting a list of equipment comprised by the service-providing device 100, a rebooting command for the equipment, and a firmware upgrade command.

In the present disclosure, the dedicated command comprises a control command that is not comprised by the common commands and represents a control command that may be interpreted by the service-providing device 100.

When a new service-providing device 100 is comprised by the network management system 10 or the function of the service-providing device 100 is added, the applications 210 to 240 provided by the user terminal 200 may need to be updated. Since the network management device 300 is configured to convert between the common command and the dedicated command, the plurality of service-providing devices 100 may be integrated and controlled even if the applications 210 to 240 provided by the user terminal 200 are not updated.

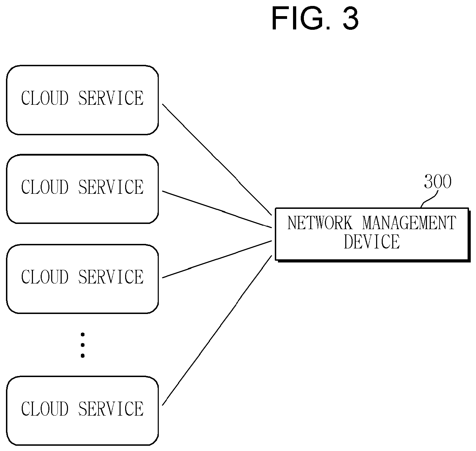

FIG. 3 is a diagram for describing functions of a network management device.

Referring to FIG. 3, the network management device 300 may provide a cloud service.

A unified service for the plurality of service-providing devices 100 is possible via the cloud service. For example, the same user interface may be provided for the plurality of service-providing devices 100 that provide similar functions. Intuitive services for different service-providing devices 100 may be provided via the same user interface.

In addition, integrated management of the above-described common command and dedicated command may be performed via the cloud service. For example, the common command and the dedicated command may be added or updated via the cloud service. The user may use the integrated and managed common command and dedicated command by modifying the application provided by the user terminal 200 or creating a new application.

There may be a plurality of cloud services provided by the network management device 300. The user may select one of the cloud services of the plurality of cloud services, and the network management device 300 may be configured to provide the cloud service selected by the user. For example, when a cloud service that provides video provision service by a specific service-providing device 100 is selected, the network management device 300 may provide a user interface that comprises a list of cameras comprised by the service-providing device 100 or a list of videos captured by the cameras. Alternatively, when a cloud service that provides an artificial intelligence analysis service for captured video is selected, the network management device 300 may provide a user interface that comprises video reflecting the results of artificial intelligence analysis.

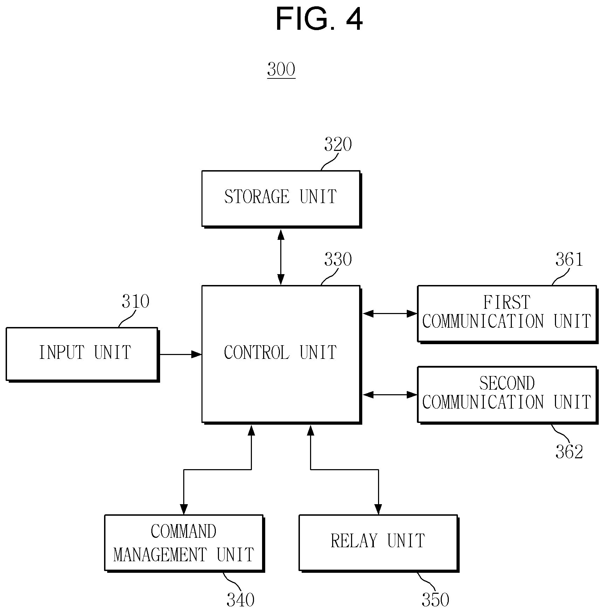

FIG. 4 is a block diagram of the network management device according to an exemplary embodiment of the present disclosure.

Referring to FIG. 4, the network management device 300 according to an exemplary embodiment of the present disclosure comprises an input unit 310, a storage unit 320, a control unit 330, a command management unit 340, a relay unit 350, a first communication unit 361, and a second communication unit 362.

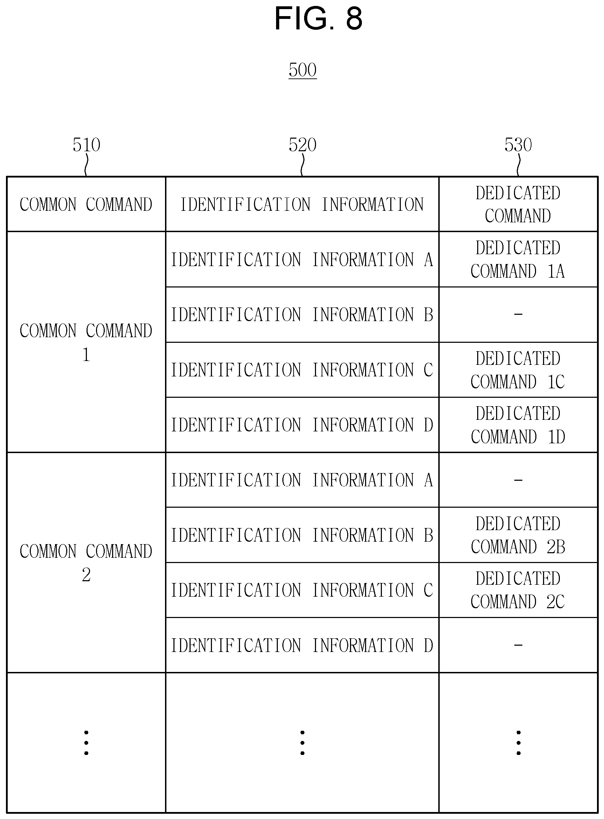

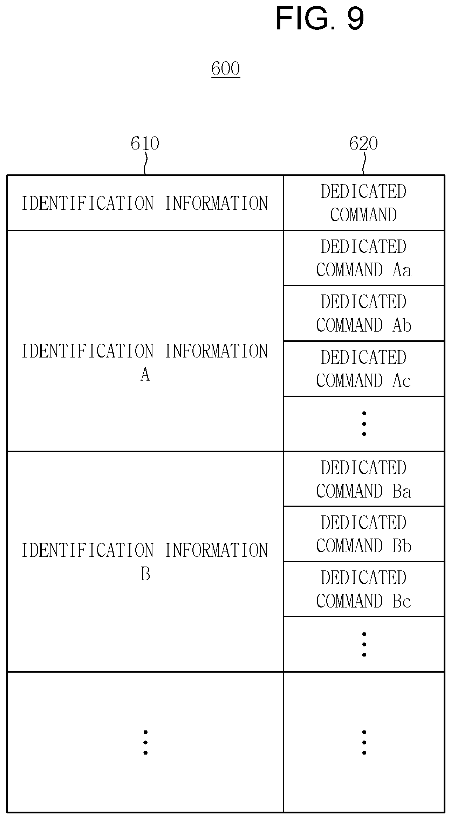

The input unit 310 may receive various data for operation of the network management device 300. For example, the input unit 310 may be configured to receive a common command table 500 (see FIG. 8) and a dedicated command table 600 (see FIG. 9), which will be described later. If the common command table 500 or the dedicated command table 600 is updated, the input unit 310 may be configured to receive the updated common command table 500 or the updated dedicated command table 600.

The storage unit 320 may be configured to temporarily or permanently store various data input via the input unit 310. For example, the storage unit 320 may be configured to store the common command table 500 and the dedicated command table 600. In addition, the storage unit 320 may be configured to store various cache information about the service-providing device 100. For example, the storage unit 320 may be configured to store information such as an active state, a shooting angle, and a storage capacity of the service-providing device 100. In addition, the storage unit 320 may be configured to temporarily or permanently store various information necessary for the operation of the network management device 300.

The command management unit 340 may be configured to process the control command received by the first communication unit 361. If the control command is received, the command management unit 340 may be configured to first determine whether the control command is a common command for at least some of the plurality of service-providing devices 100 comprised by the network management system 10. Thus, if the control command is a common command, the command management unit 340 may be configured to convert the control command into a dedicated command for a destination device. Here, the destination device represents the service-providing device 100 selected as a destination of the control command among the plurality of service-providing devices 100 comprised by the network management system 10. The user terminal 200 may be configured to transmit identification information of the destination device by including the identification information in the control command. The command management unit 340 may be configured to determine the destination device by referring to the identification information comprised by the control command, and may be configured to convert the common command into a dedicated command that may be recognized by the corresponding destination device.

The command management unit 340 may be configured to determine whether the control command is a common command by referring to the common command table 500 stored in the storage unit 320, and may be configured to convert the common command into the dedicated command. The common command table 500 will be described in detail later with reference to FIG. 8.

If the received control command is a dedicated command, the command management unit 340 may be configured to not perform conversion of the control command. The command management unit 340 may be configured to determine whether the control command is a dedicated command by referring to the dedicated command table 600 stored in the storage unit 320. The dedicated command table 600 will be described in detail later with reference to FIG. 9.

The relay unit 350 may be configured to relay communication between the user terminal 200 that transmitted the control command and the destination device. For example, the relay unit 350 may be configured to perform tunneling between the user terminal 200 and the destination device. The user terminal 200 and the destination device may be configured to exchange requests and responses via the relay unit 350.

The relay unit 350 may be configured to relay communication between the user terminal 200 and the destination device by verifying whether the user terminal 200 has been authenticated. That is, the relay unit 350 ensures that the tunneling with the destination device is performed only for the authenticated user terminal 200. If authentication of the user terminal 200 fails, the relay unit 350 may be configured to block communication between the user terminal 200 and the destination device.

The first communication unit 361 may be configured to communicate with the user terminal 200. Specifically, the first communication unit 361 may be configured to receive a control command requested to be transmitted to the destination device among the plurality of service-providing devices 100 in the network from the user terminal 200. In addition, if relaying is performed between the user terminal 200 and the destination device by the relay unit 350, the first communication unit 361 may be configured to receive a request from the user terminal 200 and transmit a response received from the destination device to the user terminal 200 in response to the request.

The second communication unit 362 may be configured to communicate with the service-providing device 100. Specifically, the second communication unit 362 may be configured to transmit a dedicated command to the destination device. If the control command received by the first communication unit 361 is a dedicated command for the destination device, the second communication unit 362 may be configured to transmit the control command to the destination device. In addition, when relaying is performed between the user terminal 200 and the destination device by the relay unit 350, the second communication unit 362 may be configured to transmit the request received from the user terminal 200 to the destination device and receive a response corresponding to the request from the destination device.

The first communication unit 361 and the second communication unit 362 may each be configured to communicate with the user terminal 200 and the service-providing device 100 via individual communication channels.

The control unit 330 may be configured to perform overall control over the input unit 310, the storage unit 320, the command management unit 340, the relay unit 350, the first communication unit 361, and the second communication unit 362.

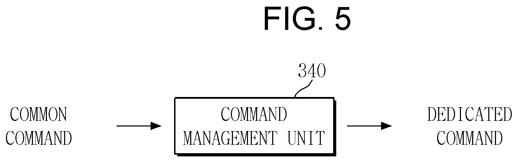

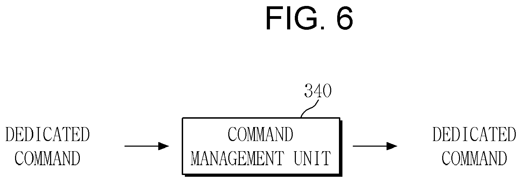

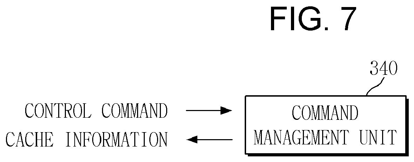

FIG. 5 is a diagram for describing an operation of a command management unit when a common command is received, FIG. 6 is a diagram for describing an operation of the command management unit when a dedicated command is received, and FIG. 7 is a diagram for describing an operation of the command management unit if cache information is available.

Referring to FIG. 5, if a common command is received as a control command, the command management unit 340 may be configured to convert the common command into a dedicated command.

The common command, which is a command set between the user terminal 200 and the network management device 300, may not be recognized by the service-providing device 100. Accordingly, the command management unit 340 may be configured to convert the common command into a dedicated command that may be recognized by the service-providing device 100.

Referring to FIG. 6, if a dedicated command is received as a control command, the command management unit 340 may be configured to not perform conversion on the control command.

If the user terminal 200 comprises a dedicated command that may be recognized by the service-providing device 100, the user terminal 200 may be configured to transmit the dedicated command as the control command. In this case, the command management unit 340 may be configured to transmit the corresponding dedicated command to the service-providing device 100 via the second communication unit 362 without performing conversion on the control command.

Referring to FIG. 7, if cache information is available for the control command, the command management unit 340 may be configured to transmit the cache information to the user terminal 200 that transmitted the control command.

The command management unit 340 may be configured to determine whether the control command may be responded to by transmitting cache information. Therefore, if the response to the control command is stored in the storage unit 320 as the cache information, the command management unit 340 may be configured to extract the corresponding cache information from the storage unit 320, and transmit the cache information to the user terminal 200 via the first communication unit 361.

Since a response to a request from the user terminal 200 is performed without communication with the service-providing device 100, faster service processing is possible and unnecessary waste of network resources may be prevented.

FIG. 8 is a diagram illustrating a common command table.

Referring to FIG. 8, the common command table 500 comprises a common command field 510, an identification information field 520, and a dedicated command field 530.

FIG. 8 illustrates a common command table 500 when the network management system 10 comprises a service-providing device A, a service-providing device B, a service-providing device C, and a service-providing device D.

A common command may be specified in the common command field 510, identification information of the service-providing device 100 may be specified in the identification information field 520, and a dedicated command may be specified in the dedicated command field 530.

Identification information of the service-providing device 100 to which the common command is applicable may be specified for each common command, and a dedicated command corresponding to the common command may be specified for each identification information of the service-providing device 100. Referring to FIG. 8, a dedicated command of the service-providing device A for a common command 1 may be dedicated command 1A, a dedicated command of the service-providing device C may be dedicated command 1C, a dedicated command of the service-providing device D may be dedicated command 1D, and a dedicated command of the service-providing device B may not be set.

If a control command is received by the first communication unit 361, the command management unit 340 may be configured to determine whether the control command is the common command by referring to the common command table 500. That is, the command management unit 340 may check whether the common command corresponding to the received control command is comprised by the common command table 500. Thus, if the received control command is comprised by the common command table 500, the command management unit 340 may be configured to determine that the control command is the common command. In addition, the command management unit 340 may be configured to check identification information of the service-providing device 100 comprised by the control command and extract a dedicated command corresponding to the identification information from the common command table 500.

The dedicated command extracted by the command management unit 340 may be transmitted to the service-providing device 100 via the second communication unit 362.

If there is a plurality of destination devices, the command management unit 340 may be configured to convert the control command into a dedicated command for each of the plurality of destination devices. The user terminal 200 may be configured to transmit a plurality of control commands to check activation states of the plurality of destination devices. Alternatively, the user terminal 200 may be configured to transmit one control command by including a plurality of common commands. The command management unit 340 may be configured to extract all dedicated commands corresponding to the corresponding control command by referring to the common command table 500. For example, if the common command 1 for the service-providing device A and the service-providing device D is received, the command management unit 340 may be configured to extract a dedicated command 1A and a dedicated command 1D from the common command table 500. Since the network management device 300 performs integrated processing of the plurality of common commands, the user terminal 200 may easily receive responses to the plurality of common commands.

In the present disclosure, the common command represents a control command set between the user terminal 200 and the network management device 300. The common command table 500 may be continuously updated by an administrator of the network management device 300, and the user terminal 200 may be configured to control a new service-providing device 100 without separately updating the applications 210 to 240.

Meanwhile, FIG. 8 illustrates that one dedicated command is specified for one identification information, but according to some exemplary embodiments of the present disclosure, a plurality of dedicated commands may also be specified for one identification information. That is, the plurality of dedicated commands may correspond to one common command. If there is a plurality of dedicated commands corresponding to the common command, the command management unit 340 may be configured to convert the control command received by the first communication unit 361 into the plurality of dedicated commands. For example, the command management unit 340 may be configured to extract the plurality of dedicated commands by referring to the common command table 500. The plurality of dedicated commands extracted by the command management unit 340 may be transmitted to the service-providing device 100 via the second communication unit 362.

FIG. 9 is a diagram illustrating a dedicated command table.

Referring to FIG. 9, the dedicated command table 600 comprises an identification information field 610 and a dedicated command field 620.

Identification information of the service-providing device 100 may be specified in the identification information field 610, and a dedicated command may be specified in the dedicated command field 620.

At least one dedicated command may be specified for each identification information of the service-providing device 100. Referring to FIG. 9, a dedicated command Aa, a dedicated command Ab, and a dedicated command Ac may be specified for service-providing device A.

If the control command received by the first communication unit 361 is not the common command, the command management unit 340 may be configured to determine whether the corresponding control command is the dedicated command by referring to the dedicated command table 600. That is, the command management unit 340 may check whether the dedicated command corresponding to the received control command is comprised by the dedicated command table 600. Thus, when the received control command is comprised by the dedicated command table 600, the command management unit 340 may be configured to determine that the control command is the dedicated command. In addition, the command management unit 340 may be configured to check identification information of the service-providing device 100 comprised by the control command and extract a dedicated command corresponding to the identification information from the dedicated command table 600.

The dedicated command extracted by the command management unit 340 may be transmitted to the service-providing device 100 via the second communication unit 362.

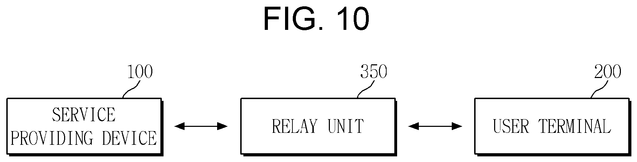

FIG. 10 is a diagram for describing an operation of a relay unit.

Referring to FIG. 10, the relay unit 350 may be configured to relay communication between the service-providing device 100 and the user terminal 200.

The relay unit 350 may be configured to receive a request from the user terminal 200 and transmit the received request to the service-providing device 100. In addition, if the service-providing device 100 transmits a response to the request, the relay unit 350 may be configured to transmit the response to the user terminal 200.

The relay unit 350 may be configured to perform a relay operation upon request from the user terminal 200. For example, the user terminal 200 may transmit a control command requesting relaying with the service-providing device 100. The user terminal 200 may be configured to not secure an address of the service-providing device 100. In this case, the user terminal 200 may request relaying with the service-providing device 100 to the relay unit 350. Accordingly, the user terminal 200 that has not secured the address of the service-providing device 100 may also be configured to receive the service of the service-providing device 100 via the relay unit 350.

It should be understood that the exemplary embodiments described above are illustrative in all aspects and not restrictive. The invention is defined by the appended claims.

## Claims

1. A network management device (300) comprising:
a first communication unit (361) configured to receive a control command requested to be transmitted to a destination device among a plurality of service-providing devices (100) in a network;
a command management unit (340) configured to determine whether the received control command is a common command which is not recognized by the destination device or a dedicated command which is recognized by the destination device, and convert the received control command into a dedicated command if the control command is a common command; and
a second communication unit (362) configured to transmit the received control command or the converted control command to the destination device.

2. The network management device (300) of claim 1, wherein the common command comprises a control command for the same function that is provided by at least some of the plurality of service-providing devices (100), and
the dedicated command comprises a control command that is not comprised by the common command among received control commands.

3. The network management device (300) of claim 1, wherein the command management unit (340) is further configured to transmit the cache information to a user terminal (200) that transmitted the control command if cache information is available for the control command.

4. The network management device (300) of claim 1, further comprising a relay unit (350) configured to relay communication between a user terminal (200) that transmitted the control command and the destination device.

5. The network management device (300) of claim 4, wherein the relay unit (350) relays the communication between the user terminal (200) and the destination device by verifying whether the user terminal is authenticated.

6. The network management device (300) of claim 1, wherein if there is a plurality of destination devices, the command management unit (340) is further configured to convert the control command into a dedicated command for each of the plurality of destination devices.

7. The network management device (300) of claim 1, wherein if there is a plurality of dedicated commands corresponding to the common command, the command management unit (340) is further configured to convert the control command into the plurality of dedicated commands.

8. The network management device (300) of claim 1, wherein the common command and the dedicated command comprise commands added or updated via a cloud service.

9. A network management method, performed by a network management device, comprising the steps of:
receiving a control command requested to be transmitted to a destination device among a plurality of service-providing devices (100) in a network;
determining whether the received control command is a common command which is not recognized by the destination device or a dedicated command which is recognized by the destination device;
converting the received control command into a dedicated command if the control command is a common command; and
transmitting the received control command or the converted control command to the destination device.

10. The network management method of claim 9, wherein the common command comprises a control command for the same function that is provided by at least some of the plurality of service-providing devices (100), and
the dedicated command comprises a control command that is not comprised by the common command among received control commands.

11. The network management method of claim 9, further comprising transmitting cache information to a user terminal that transmitted the control command if the cache information is available for the control command.

12. The network management method of claim 9, further comprising relaying communication between a user terminal (200) that transmitted the control command and the destination device.

13. The network management method of claim 9, further comprising converting the control command into a dedicated command for each of a plurality of destination devices if there is a plurality of destination devices.

## Patentansprüche

1. Netzwerkverwaltungsvorrichtung (300), umfassend:
eine erste Kommunikationseinheit (361), die konfiguriert ist zum Empfangen eines Steuerbefehls, dessen Übertragung an eine Zielvorrichtung unter einer Vielzahl von dienstbereitstellenden Vorrichtungen (100) in einem Netzwerk angefordert ist;
eine Befehlsverwaltungseinheit (340), die konfiguriert ist zum Bestimmen, ob der empfangene Steuerbefehl ein gemeinsamer Befehl ist, der von der Zielvorrichtung nicht erkannt wird, oder ein gerätespezifischer Befehl ist, der von der Zielvorrichtung erkannt wird, und den empfangenen Steuerbefehl in einen gerätespezifischen Befehl umzuwandeln, wenn der Steuerbefehl ein gemeinsamer Befehl ist; und
eine zweite Kommunikationseinheit (362), die konfiguriert ist zum Übertragen des empfangenen Steuerbefehls oder des umgewandelten Steuerbefehls an die Zielvorrichtung.

2. Netzwerkverwaltungsvorrichtung (300) nach Anspruch 1, wobei der gemeinsame Befehl einen Steuerbefehl für dieselbe Funktion umfasst, die von zumindest einigen der Vielzahl von dienstbereitstellenden Vorrichtungen (100) bereitgestellt wird, und der gerätespezifische Befehl einen Steuerbefehl umfasst, der unter empfangenen Steuerbefehlen nicht im gemeinsamen Befehl enthalten ist.

3. Netzwerkverwaltungsvorrichtung (300) nach Anspruch 1, wobei die Befehlsverwaltungseinheit (340) ferner konfiguriert ist zum Übertragen der Cache-Informationen an ein Benutzerendgerät (200), das den Steuerbefehl übertragen hat, wenn für den Steuerbefehl Cache-Informationen verfügbar sind.

4. Netzwerkverwaltungsvorrichtung (300) nach Anspruch 1, ferner umfassend eine Weiterleitungseinheit (350), die konfiguriert ist zum Weiterleiten von einer Kommunikation zwischen einem Benutzerendgerät (200), das den Steuerbefehl übertragen hat, und der Zielvorrichtung.

5. Netzwerkverwaltungsvorrichtung (300) nach Anspruch 4, wobei die Weiterleitungseinheit (350) die Kommunikation zwischen dem Benutzerendgerät (200) und der Zielvorrichtung weiterleitet, indem verifiziert wird, ob das Benutzerendgerät authentifiziert ist.

6. Netzwerkverwaltungsvorrichtung (300) nach Anspruch 1, wobei, wenn eine Vielzahl von Zielvorrichtungen vorhanden ist, die Befehlsverwaltungseinheit (340) ferner konfiguriert ist zum Umwandeln des Steuerbefehls in einen gerätespezifischen Befehl für jede der Vielzahl von Zielvorrichtungen.

7. Netzwerkverwaltungsvorrichtung (300) nach Anspruch 1, wobei, wenn eine Vielzahl von gerätespezifischen Befehlen vorhanden ist, die dem gemeinsamen Befehl entsprechen, die Befehlsverwaltungseinheit (340) ferner konfiguriert ist zum Umwandeln des Steuerbefehls in die Vielzahl von gerätespezifischen Befehlen.

8. Netzwerkverwaltungsvorrichtung (300) nach Anspruch 1, wobei der gemeinsame Befehl und der gerätespezifische Befehl Befehle umfassen, die über einen Cloud-Dienst hinzugefügt oder aktualisiert werden.

9. Netzwerkverwaltungsverfahren, das durch eine Netzwerkverwaltungsvorrichtung ausgeführt wird, umfassend die folgenden Schritte:
Empfangen eines Steuerbefehls, dessen Übertragung an eine Zielvorrichtung unter einer Vielzahl von dienstbereitstellenden Vorrichtungen (100) in einem Netzwerk angefordert ist;
Bestimmen, ob der empfangene Steuerbefehl ein gemeinsamer Befehl ist, der von der Zielvorrichtung nicht erkannt wird, oder ein gerätespezifischer Befehl ist, der von der Zielvorrichtung erkannt wird;
Umwandeln des empfangenen Steuerbefehls in einen gerätespezifischen Befehl, wenn der Steuerbefehl ein gemeinsamer Befehl ist; und
Übertragen des empfangenen Steuerbefehls oder des umgewandelten Steuerbefehls an die Zielvorrichtung.

10. Netzwerkverwaltungsverfahren nach Anspruch 9, wobei der gemeinsame Befehl einen Steuerbefehl für dieselbe Funktion umfasst, die von zumindest einigen der Vielzahl von dienstbereitstellenden Vorrichtungen (100) bereitgestellt wird, und der gerätespezifische Befehl einen Steuerbefehl umfasst, der unter empfangenen Steuerbefehlen nicht im gemeinsamen Befehl enthalten ist.

11. Netzwerkverwaltungsverfahren nach Anspruch 9, ferner umfassend das Übertragen von Cache-Informationen an ein Benutzerendgerät, das den Steuerbefehl übertragen hat, wenn für den Steuerbefehl Cache-Informationen verfügbar sind.

12. Netzwerkverwaltungsverfahren nach Anspruch 9, ferner umfassend das Weiterleiten einer Kommunikation zwischen einem Benutzerendgerät (200), das den Steuerbefehl übertragen hat, und der Zielvorrichtung.

13. Netzwerkverwaltungsverfahren nach Anspruch 9, ferner umfassend das Umwandeln des Steuerbefehls in einen gerätespezifischen Befehl für jede von einer Vielzahl von Zielvorrichtungen, wenn eine Vielzahl von Zielvorrichtungen vorhanden ist.

## Revendications

1. Dispositif de gestion de réseau (300) comprenant :
une première unité de communication (361) configurée pour recevoir une commande de contrôle destinée à être transmise à un dispositif de destination parmi une pluralité de dispositifs de fourniture de services (100) dans un réseau ;
une unité de gestion de commande (340) configurée pour déterminer si la commande de contrôle reçue est une commande commune non reconnue par le dispositif de destination ou une commande dédiée reconnue par le dispositif de destination, et
convertir la commande de contrôle reçue en une commande dédiée si la commande de contrôle est une commande commune ; et
une deuxième unité de communication (362) configurée pour transmettre la commande de contrôle reçue ou la commande de contrôle convertie au dispositif de destination.

2. Dispositif de gestion de réseau (300) selon la revendication 1, dans lequel la commande commune comprend une commande de contrôle pour la même fonction qui est fournie par au moins certains de la pluralité de dispositifs de fourniture de service (100), et
la commande dédiée comprend une commande de contrôle qui n'est pas comprise par la commande commune parmi les commandes de contrôle reçues.

3. Dispositif de gestion de réseau (300) selon la revendication 1, dans lequel l'unité de gestion de commande (340) est en outre configurée pour transmettre les informations de mémoire cache à un terminal utilisateur (200) qui a transmis la commande de contrôle si des informations de mémoire cache sont disponibles pour la commande de contrôle.

4. Dispositif de gestion de réseau (300) selon la revendication 1, comprenant en outre une unité de relais (350) configurée pour relayer la communication entre un terminal d'utilisateur (200) qui a transmis la commande de contrôle et le dispositif de destination.

5. Dispositif de gestion de réseau (300) selon la revendication 4, dans lequel l'unité de relais (350) relaie la communication entre le terminal d'utilisateur (200) et le dispositif de destination en vérifiant si le terminal d'utilisateur est authentifié.

6. Dispositif de gestion de réseau (300) selon la revendication 1, dans lequel, s'il y a une pluralité de dispositifs de destination, l'unité de gestion de commande (340) est en outre configurée pour convertir la commande de contrôle en une commande dédiée pour chacun de la pluralité de dispositifs de destination.

7. Dispositif de gestion de réseau (300) selon la revendication 1, dans lequel, s'il y a une pluralité de commandes dédiées correspondant à la commande commune, l'unité de gestion de commande (340) est en outre configurée pour convertir la commande de contrôle en la pluralité de commandes dédiées.

8. Dispositif de gestion de réseau (300) selon la revendication 1, dans lequel la commande commune et la commande dédiée comprennent des commandes ajoutées ou mises à jour par l'intermédiaire d'un service de cloud.

9. Procédé de gestion de réseau, exécuté par un dispositif de gestion de réseau, comprenant les étapes suivantes :
recevoir une commande de contrôle destinée à être transmise à un dispositif de destination parmi une pluralité de dispositifs de fourniture de services (100) dans un réseau ;
déterminer si la commande de contrôle reçue est une commande commune non reconnue par le dispositif de destination ou une commande dédiée reconnue par le dispositif de destination ;
convertir la commande de contrôle reçue en une commande dédiée, si la commande de contrôle est une commande commune ; et
transmettre la commande de contrôle reçue ou la commande de contrôle convertie au dispositif de destination.

10. Procédé de gestion de réseau selon la revendication 9, dans lequel la commande commune comprend une commande de contrôle pour la même fonction qui est fournie par au moins certains de la pluralité de dispositifs de fourniture de service (100), et
la commande dédiée comprend une commande de contrôle qui n'est pas comprise par la commande commune parmi les commandes de contrôle reçues.

11. Procédé de gestion de réseau selon la revendication 9, comprenant en outre de transmettre des informations de mémoire cache à un terminal utilisateur qui a transmis la commande de contrôle si les informations de mémoire cache sont disponibles pour la commande de contrôle.

12. Procédé de gestion de réseau selon la revendication 9, comprenant en outre de relayer une communication entre un terminal d'utilisateur (200) qui a transmis la commande de contrôle et le dispositif de destination.

13. Procédé de gestion de réseau selon la revendication 9, comprenant en outre de convertir la commande de contrôle en une commande dédiée pour chacun d'une pluralité de dispositifs de destination s'il y a une pluralité de dispositifs de destination.
